# EUROPÄISCHE PATENTSCHRIFT

(11) **EP 0 795 731 B1**
(45) Veröffentlichungstag und Bekanntmachung des Hinweises auf die Patenterteilung: **19.02.2003**
(21) Anmeldenummer: 97103618.1
(22) Anmeldetag: 05.03.1997
(51) Int. Cl.: F28F 11/00, F16L 55/16

(54) **Verfahren zur Reparatur von Wärmetauscherrohren**
Method for repairing heat exchanger tubes
Procédé de réparation de tubes d'échangeur de chaleur

(30) Priorität: 14.03.1996 DE 19609958
(43) Veröffentlichungstag der Anmeldung: 17.09.1997
(73) Patentinhaber: DSD Dillinger Stahlbau GmbH, 66740 Saarlouis (DE)
(72) Erfinder: Czeslik, Paul, 46145 Oberhausen (DE); Struberg, Karl, 46049 Oberhausen (DE); Tegethoff, Helmut, 46119 Oberhausen (DE)

(56) Entgegenhaltungen:
- EP-A- 0 047 410
- EP-A- 0 234 920
- FR-A- 2 598 210
- US-A- 3 962 767
- US-A- 4 783 890
- US-A- 4 941 512

## Beschreibung

Die Erfindung betrifft ein Verfahren zur Reparatur von Wärmetauscherrohren durch Teilrohraustausch im Inneren von geschlossenen Röhrenapparaten mit mindestens einem zylindrischen Rohrboden von der Rohrseite her.

Der vorliegende Schadensmechanismus kann durch unterschiedliche Ursachen wie Korrosion, Beulen oder sonstige Ereignisse innerhalb und ausserhalb des Rohrbodens im Rohrsystem ausgelöst werden.

In der EP-A- 0 234 920 wird ein Verfahren zur Reparatur von Wärmetauscherrohren beschrieben, das überwiegend dem Oberbegriff der vorliegenden Erfindung mit den folgenden Verfahrensschritten entspricht:
- Ausarbeiten von Beulen durch Einführen eines rotierenden Aufbohrwerkzeuges durch den Rohrboden in das Innere des Rohrabschnittes,
- Trennen eines Teilrohrabschnittes durch ein rotierendes Schneidwerkzeug im Inneren des Teilrohrabschnittes,
- Entfernen der Verbindungsschweissung Rohr/Rohrboden mittels mechanischer Bearbeitung,
- Ziehen eines Teilrohrabschnittes nach verlaufendem Schrumpfen der Walzteile mittels eines Gewindebohrers bzw. einer Ausziehvorrichtung durch den Rohrboden,
- Ausarbeiten einer Zentrierung am verbliebenen Wärmetauscherrohr mittels eines rotierenden Fräswerkzeuges durch den Rohrboden,
- Einsetzen eines neuen Teilrohrabschnittes durch die Rohrbodenbohrung,
- Zusammenfügen des Teilrohrabschnittes mit dem verbliebenen Wärmetauscherrohr mittels Innenrohrschweissung mit oder ohne Zusatzdraht durch den Rohrboden,
- Druckprüfung der Fügenaht,
- Zusammenfügen des Teilrohrabschnittes mit dem Rohrboden bzw. mit der Plattierung des Rohrbodens,
- Hydraulisches Aufweiten des Teilrohrabschnittes in der Bohrung des Rohrbodens.

Nach der Vorschrift gemäß der EP-A-0 234 920 ist eine Verklammerung der Enden des neuen Teilrohrabschnittes und/oder des verbliebenen Wärmetauscherrohres vorgesehen, bevor beide Abschnitte durch Schweissen zusammengefügt werden. Dadurch wird der Innendurchmesser des reparierten Rohrabschnittes eingeengt, so dass es hier zu Änderungen der Strömungsgeschwindigkeit des durchfließenden Mediums kommt, wodurch sich die Auslegungsdaten des Röhrenapparates verändern.

Aus der US-A-3 962 767, die ebenfalls ein Verfahren zur Reparatur eines Wärmeaustauscherrohres betrifft, ist es bekannt, den Reparaturbereich innerhalb des Apparates mit Gas zur Verbesserung des Schweissprozesses zu fluten. Femer geht aus dieser Druckschrift hervor, ein Rohr an eine Bohrung anzuwalzen, um eine feste Verbindung zwischen beiden Teilen zu erreichen.

Aus der US-A-4 783 890 ist u.a. ersichtlich, dass ein in ein Wärmetauscherrohr eingezogenes Sleeve-Rohr zum Schweissen hydraulisch aufgeweitet wird.

Bei der laufenden Überwachung von. Röhrenapparaten in Kraftwerken, in der chemischen Industrie usw. werden während der Revisionen Kontrollen auf Funktionstüchtigkeit der Rohrsysteme durchgeführt.

Sobald ein Schaden erkannt wird, ist zunächst die Frage nach einer möglichen Schadensbehebung zu klären, die durch Reparatur von einzelnen Wärmetauscherrohren vor Ort oder durch einen Komplettaustausch erfolgen kann.

Aufgabe der Erfindung ist es daher, ein zuverlässiges und relativ einfaches Verfahren zu entwickeln, durch das die festgestellten Schäden an Wärmetauscherrohren beseitigt werden, ohne dass der Röhrenapparat unbedingt demontiert werden muss.

Die Lösung der Aufgabe erfolgt in der Weise, wie es im Patentanspruch angegeben ist.

Die Erfindung deckt in ihren Verfahrensschritten jede Einbauposition des Röhrenapparates (von senkrecht bis waagerecht) ab.

Die Reparatur ersetzt eine Neuberohrung oder den Komplettaustausch des Apparates und stellt die Funktion gemäß Neuzustand bei Anwendung des "Teilrohraustausches" uneingeschränkt wieder her.

Das Verfahren wird unter starker Sichtbehinderung bis hin zum Sichtausschluss durchgeführt, so dass die einzelnen Operationen als fernbediente/ferngesteuerte Vorgänge zu betrachten sind.

Bei vorgenannten Röhrenapparaten handelt es sich überwiegend um Wärmetauscherrohre ≥ 10 mm im Durchmesser und ≥ 0,5 mm in der Wandstärke.

In der Regel werden Geradrohre, Haarnadelrohre oder auch andere Figurationen bei der Herstellung verwendet. Die Anzahl der Rohre entspricht jeweils der erforderlichen Leistung gemäß der wärmetechnischen Auslegung des Röhrenapparates. Es kommen austenitische und ferritische Stähle sowie eine Vielzahl von Sonderlegierungen zum Einsatz.

Erfindungsgemäß erfolgt die Reparatur entsprechend dem Schadensbild durch einen "Teilrohraustausch" von beschädigten Wärmetauscherrohren im Rohrsystem eines Röhrenapparates.

Bei der Reparatur der geschädigten Wärmetauscherrohre durch "Teilrohraustausch" werden folgende Verfahresschritte durchgeführt:
- Ausarbeiten der Beulen durch Einführen eines rotierenden Aufbohrwerkzeuges durch den Rohrboden in das Innere eines Rohrabschnittes,
- Trennen eines Teilrohrabschnittes durch ein rotierendes Schneidwerkzeug im Inneren des Rohrabschnittes,
- Entfernen der Verbindungsschweissung Rohr/Rohrboden mittels mechanischer Bearbeitung,
- Ziehen des Teilrohrabschnittes nach vorlaufendem Schrumpfen der Walzstelle mittels eines Gewindebohrers bzw. einer Ausziehvorrichtung durch den Rohrboden,
- Ausarbeiten einer Zentrierung am verbliebenen Wärmetauscherrohr mittels eines rotierenden Fräswerkzeuges durch den Rohrboden,
- Einsetzen eines neuen Teilrohrabschnittes durch die Rohrbodenöffnung,
- Füllen der Innenmantelseite des Röhrenapparates mit Formiergas,
- Zusammenfügen des Teilrohrabschnittes mit dem verbliebenen Wärmetauscherrohr mittels Innenrohrschweissung mit oder ohne Zusatzdraht durch den Rohrboden, wobei die Innenrohrschweissung selbstverständlich ferngesteuert wird, da der Schweissbereich nicht einsehbar ist,
- Druckprüfung der Fügenaht,
- Zusammenfügen des Teilrohrabschnittes mit dem Rohrboden bzw. der Plattierung des Rohrbodens,
- Hydraulisches Aufweiten des Teilrohrabschnittes in der Bohrung des Rohrbodens,
- Durchführung von Prüfungen zur Beurteilung der Qualität der Fügenähte.

Nach einem Merkmal der Erfindung sollen der neue Teilrohrabschnitt (6) und das verbliebene Wärmetauscherrohr (4) einen lichten Durchmesser von ≥ 10 mm und eine Wandstärke von ≥ 0,5 mm aufweisen.

Das erfindungsgemäße Verfahren zur Reparatur von Wärmetauscherrohren durch Teilrohraustausch weist gegenüber dem Stand der Technik den besonderen Vorteil auf, dass sich die beiden Rohrenden von neuem Teilrohrabschnitt und verbliebenem Wärmetauscherrohr vor dem Zusammenfügen durch Innenrohrschweissung zentrisch und bündig gegenüberstehen. Nach dem Verschweissen ist daher im Gegensatz zu dem Verfahren nach der EP-A-0 234 920 keine Verengung im inneren Rohrbereich feststellbar und mit der Reparatur wird wieder der Neuzustand innerhalb des Apparates erreicht.

In das Gehäuse, d.h. innerhalb des Innenmantels des Röhrenapparates, wird Formiergas eingeschleust, das die Wärmetauscherrohre umspült und dadurch den Schweissprozess verbessert.

Nach einem weiteren Merkmal der Erfindung wird der Teilrohrabschnitt (6) an die Bohrung (3) des Rohrbodens (1) angewalzt.

Eine Anwendung des erfindungsgemäßen Verfahrens, d.h. eine Reparatur von Wärmetauscherrohren durch einen Teilrohraustausch, wird anhand eines schematischen Ausführungsbeispiels näher erläutert.
Es zeigen:
- Fig. 1: das Ausarbeiten der Beulen,
- Fig. 2: das Trennen eines Teilrohrabschnittes,
- Fig. 3: das Entfemen der Verbindungsschweissung Rohr/Rohrboden,
- Fig. 4: das Ziehen des Teilrohrabschnittes
- Fig. 5: das Einsetzen eines neuen Teilrohrabschnittes,
- Fig. 6: das Zusammenfügen des Teilrohrabschnittes mit dem verbliebenen Wärmetauscherrohr,
- Fig. 7: die Druckprüfung,
- Fig. 8: das Zusammenfügen des neuen Teilrohrabschnittes mit dem Rohrboden,
- Fig. 9: das hydraulische Aufweiten des Teilrohrabschnittes in der Bohrung des Rohrbodens und
- Fig.10: das Anwalzen des Teilrohrabschnittes an die Bohrung des Rohrbodens.

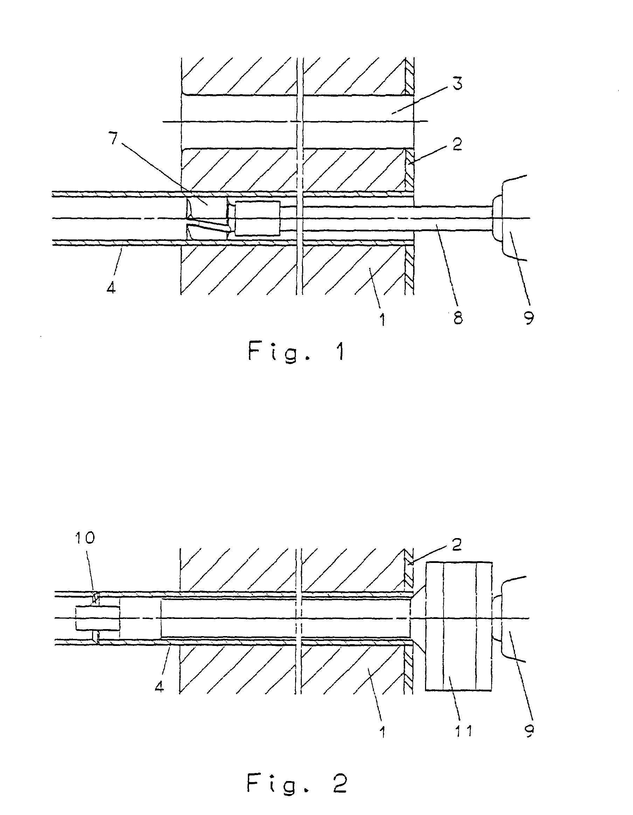

In Fig. 1 ist der erste Bearbeitungsschritt eines gebeulten Wärmetauscherrohres (4) dargestellt.

Durch Einführen eines rotierenden Aufbohrwerkzeuges (7) mit Halterung (8) und Antrieb (9), das beispielsweise ein Zapfensenker sein kann, wird das in einer der Bohrungen (3) des Rohrbodens (1) an der Plattierung (2) eingeschweisste Wärmetauscherrohr (4) von innen liegenden Beulen befreit.

Gemäß Fig. 2 wird das Wärmetauscherrohr (4) durch ein im Inneren des Rohrabschnittes rotierendes Schneidwerkzeug (10) mit Antrieb (9) und Vorschubgetriebe (11) durchtrennt.

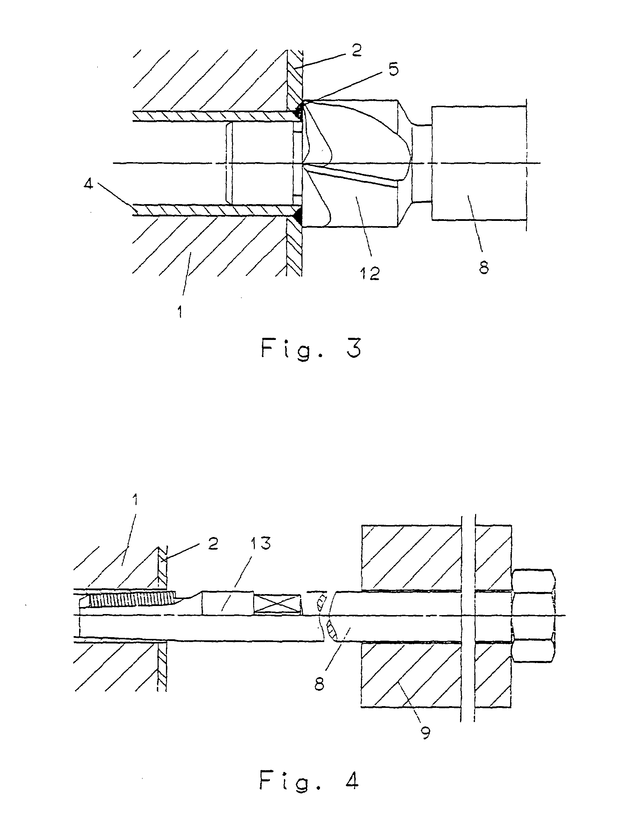

Entsprechend Fig. 3 wird die Schweissnaht (5) des abgetrennten Wärmetauscherrohres (4) an der Plattierung (2) des Rohrbodens (1) mit einem Fräswerkzeug (12) beseitigt und durch ein Ausziehwerkzeug (13) mit Halterung (8) und Antrieb (9) entsprechend Fig. 4 aus der Bohrung (3) des Rohrbodens (1) herausgezogen.

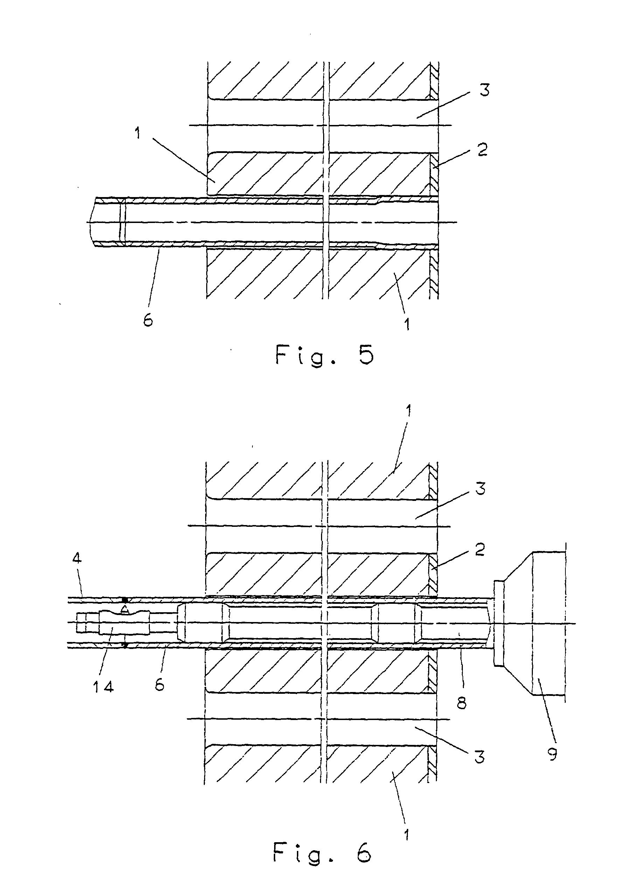

Nach Reinigung der Bohrung (3) wird ein neuer Teilrohrabschnitt (6) entsprechend Fig. 5 durch die Bohrung (3) des Rohrbodens (1) eingeführt.

Das Zusammenfügen des neuen Teilrohrabschnittes (6) mit dem im Inneren des Wärmetauschers verbliebenen Wärmetauscherrohr (4) erfolgt, wie in Fig. 6 dargestellt, durch eine Innenrohr- bzw. Orbitalschweissung mittels eines an einer Halterung (8) und Antrieb (9) befestigten Innenrohrschweissgerätes (14), das durch den neuen Teilrohrabschnitt (6) eingeführt wird.

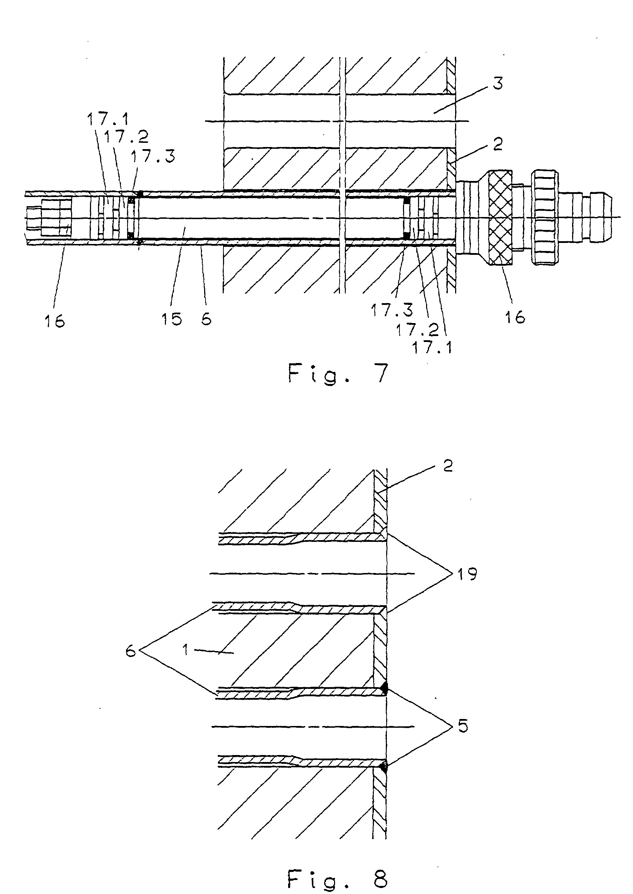

Nach Verschweissen von Teilrohrabschnitt (6) und Wärmetauscherrohr (4) erfolgt gemäß Fig. 7 als nächster Arbeitsschritt eine Druckprobe auf Dichtigkeit der Schweissnaht, Hierfür wird ein Druckprüfrohr (15) mit beidseitigen Schraubverschlüssen (16) verwendet. Zwischen Schraubverschlüssen (16) und Druckprüfrohr (15) werden beidseitig Segment- (17.1), Kunststoff- (17.2) und O-Ringe (17.3) angeordnet.

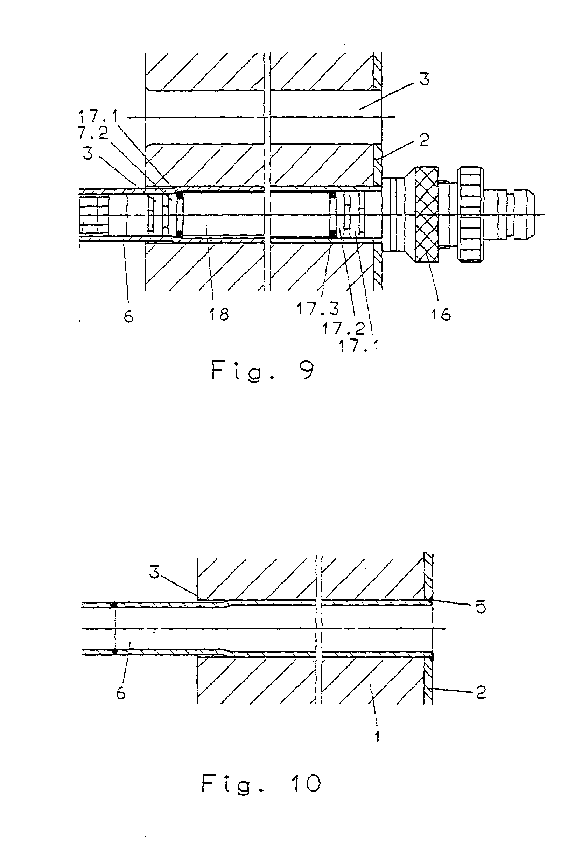

Fig. 8 zeigt die Einschweissung des neuen Teilrohrabschnittes (6) an der Plattierung (2) des Rohrbodens (1). Nach Vorbereitungsarbeiten (19) wird eine Schweissnaht (5) zwischen der Plattierung (2) und der Schnittkante des Teilrohrabschnittes (6) aufgebracht.

Entsprechend Fig. 9 erfolgt anschließend ein Aufweiten des eingeschweissten Teilrohrabschnittes (6) in der Bohrung (2) des Rohrbodens (1) durch eine Hydrauliksonde (18), die beidseitig mit Schraubverschlüssen (16) und Dichtungselementen (17.1, 17.2, 17.3) versehen ist.

Fig. 10 zeigt schließlich die Möglichkeit des Anwalzens des Teilrohrabschnittes (6) in der Bohrung (3) des Rohrbodens (1) durch ein nicht dargestelltes Werkzeug nach bereits gelegter Schweissnaht (5) an der Plattierung 2).

### Bezugsziffernliste:

- 1: Rohrboden
- 2: Plattierung
- 3: Bohrung
- 4: Wärmetauscherrohrng
- 5: Schweissnaht
- 6: Teilrohrabschnitt
- 7: Aufbohrwerkzeug
- 8: Halterung
- 9: Antrieb
- 10: Schneidwerkzeug
- 11: Vorschubgetriebe
- 12: Fräswerkzeug
- 13: Ausziehwerkzeug
- 14: Innenrohrschweissgerät
- 15: Druckprüfrohr
- 16: Schraubverschlüsse
- 17.1: Segmentring
- 17.2: Kunstoffring
- 17.3: O-Ring
- 18: Hydrauliksonde

## Patentansprüche

1. Verfahren zur Reparatur von Wärmetauscherrohren durch Teilrohraustausch im Inneren von geschlossenen Röhrenapparaten mit mindestens einem zylindrischen Rohrboden von der Rohrseite her, wobei in an sich bekannter Weise die folgenden Verfahrensschritte ausgeführt werden:
- Ausarbeiten von Beulen durch Einführen eines rotierenden Aufbohrwerkzeuges durch den Rohrboden in das Innere des Rohrabschnittes,
- Trennen eines Teilrohrabschnittes durch ein rotierendes Schneidwerkzeug im Inneren des Teilrohrabschnittes,
- Entfernen der Verbindungsschweissung Rohr/Rohrboden mittels mechanischer Bearbeitung,
- Ziehen eines Teilrohrabschnittes nach verlaufendem Schrumpfen der Walzstelle mittels eines Gewindebohrers bzw. einer Ausziehvorrichtung durch den Rohrboden,
- Ausarbeiten einer Zentrierung am verbliebenen Wärmetauscherrohr mittels eines rotierenden Fräswerkzeuges durch den Rohrboden,
- Einsetzen eines neuen Teilrohrabschnittes durch die Rohrbodenbohrung,
- Zusammenfügen des Teilrohrabschnittes mit dem verbliebenen Wärmetauscherrohr mittels Innenrohrschweissung mit oder ohne Zusatzdraht durch den Rohrboden,
- Druckprüfung der Fügenaht,
- Zusammenfügen des Teilrohrabschnittes mit dem Rohrboden bzw. der Plattierung des Rohrbodens,
- Hydraulisches Aufweiten des Teilrohrabschnittes in der Bohrung des Rohrbodens,
**dadurch gekennzeichnet,**
**dass** der neue Teilrohrabschnitt (6) und das verbliebene Wärmetauscherrohr (4) einen lichten Durchmesser von 10 mm und mehr und eine Wandstärke von 0,5 mm und mehr aufweisen,
**dass** sich die zentrierten Enden des verbliebenen Wärmetauscherrohres (4) und des durch die Rohrbodenbohrung (3) eingesetzten Teilrohrabschnittes (6) zum Zweck des Zusammenfügens mit ihren Querschnitten bündig gegenüberstehen, ohne dass zuvor eine Verklammerung oder dgl. der Enden des Wärmetauscherrohres (4) und des Teilrohrabschnittes (6) vorgesehen wird,
**dass** beim Zusammenfügen der Rohrabschnitte (4, 6) ohne visuellen Einblick mittels ferngesteuerter Innenrohrschweissung keine Einengung des Innenrohrquerschnittes im Bereich der Schweissnaht (5) stattfindet,
**dass** zur Verbesserung des Schweissprozesses das Behälterinnere des Röhrenapparates mit Formiergas gefüllt wird, und
**dass** der Teilrohrabschnitt (6) an die Bohrung (3) des Rohrbodens (1) angewalzt wird.

## Claims

1. Method of repairing heat-exchanger tubes by partial tube replacement in the interior of closed tube apparatuses having at least one cylindrical tube base from the tube side, wherein the following method steps are carried out in a manner known *per se:*
- working out of dents by introduction of a rotating boring tool through the tube base into the interior of the tube section,
- separation of a partial tube section by means of a rotating cutting tool in the interior of the partial tube section,
- removal of the tube/tube base joint weld by means of mechanical working,
- withdrawal of a partial tube section after prior shrinkage of the rolling site by means of a tap or a withdrawing apparatus through the tube base,
- working out of a centring on the remaining heat-exchanger tube by means of a rotating cutting tool through the tube base,
- insertion of a new partial tube section through the bore in the tube base,
- joining of the partial tube section with the remaining heat-exchanger tube by means of internal tube welding with or without auxiliary wire through the tube base,
- pressure testing of the joining seam,
- joining of the partial tube section with the tube base or the cladding of the tube base,
- hydraulic expansion of the partial tube section in the bore of the tube base,
**characterised in that**
the new partial tube section (6) and the remaining heat-exchanger tube (4) have an inside diameter of 10 mm or more and a wall thickness of 0.5 mm or more, **in that** the cross-sections of the centred ends of the remaining heat-exchanger tube (4) and of the partial tube section (6) inserted through the bore (3) in the tube base are located flush opposite one another for the purposes of the joining, without prior cramping or the like of the ends of the heat-exchanger tube (4) and of the partial tube section (6), **in that**, when the tube sections (4, 6) are joined, without its being visible, by means of remote-controlled internal tube welding, no narrowing of the inner tube cross-section in the region of the welding seam (5) takes place, **in that** the inside of the vessel of the tube apparatus is filled with forming gas in order to improve the welding process, and **in that** the partial tube section (6) is rolled onto the bore (3) of the tube base (1).

## Revendications

1. Procédé pour réparer des tubes d'échangeurs de chaleur en remplaçant des parties de tubes à l'intérieur d'appareils à tubes fermés avec au moins une assise de tubes cylindrique provenant du côté du tube, pour lequel on exécute les étapes de procédé suivantes d'une façon en soi connue :
- réalisation de bosselures en introduisant un outil rotatif d'alésage à travers l'assise du tube à l'intérieur du segment de tube,
- séparation d'un segment de tube par un outil rotatif de découpe à l'intérieur du segment de tube,
- retrait de la soudure de liaison tube / assise du tube par un traitement mécanique,
- traction d'un segment de tube une fois exécuté le rétrécissement de point de laminage au moyen d'un taraud ou d'un dispositif d'extraction à travers l'assise du tube,
- réalisation d'un centrage sur le tube d'échangeur de chaleur restant au moyen d'un outil rotatif de fraisage à travers l'assise du tube,
- introduction d'un nouveau segment de tube à travers le trou de forage de l'assise du tube,
- assemblage du segment de tube avec le tube d'échangeur de chaleur restant au moyen d'un soudage intérieur du tube avec ou sans fil métallique supplémentaire à travers l'assise du tube,
- essai de pression du point de soudure,
- assemblage du segment de tube avec l'assise du tube ou le revêtement d'assise du tube,
- élargissement hydraulique du segment de tube dans le trou de forage de l'assise du tube,
**caractérisé en ce que**
le nouveau segment de tube (6) et le tube d'échangeur de chaleur (4) restant présentent un diamètre intérieur de 10 mm et plus et une épaisseur de paroi de 0,5 mm et plus, les extrémités centrées du tube d'échangeur de chaleur (4) restant et du segment de tube (6) introduit à travers le trou de forage de l'assise du tube, dans le but de l'assemblage avec leurs sections transversales, se font face en affleurement sans qu'on prévoie préalablement un serrage ou autre des extrémités du tube d'échangeur de chaleur (4) et du segment de tube (6), et lors de l'assemblage des segments de tube (4, 6) sans observation visuelle au moyen de soudage de tube intérieur commandé à distance, on ne réalise pas de resserrement de la section transversale du tube intérieur dans la zone du point de soudure (5), l'intérieur du récipient de l'appareil à tubes est rempli de gaz de formage pour améliorer l'opération de soudage et le segment de partie de tubes (6) est laminé sur le trou de forage (3) de l'assise du tube (1).
